# EUROPÄISCHE PATENTSCHRIFT

(11) **EP 3 286 045 B1**
(45) Veröffentlichungstag und Bekanntmachung des Hinweises auf die Patenterteilung: **08.05.2019**
(21) Anmeldenummer: 16718637.8
(22) Anmeldetag: 19.04.2016
(51) Int. Cl.: B60S 1/08, H01Q 1/32

(54) **REGENSENSORVORRICHTUNG ZUM ERFASSEN EINES NIEDERSCHLAGS MIT KOMMUNIKATIONSEINRICHTUNG, FAHRERASSISTENZSYSTEM, KRAFTFAHRZEUG SOWIE VERFAHREN**
RAIN SENSOR DEVICE FOR DETECTING PRECIPITATION, COMPRISING A COMMUNICATION DEVICE, DRIVER ASSISTANCE SYSTEM, MOTOR VEHICLE, AND METHOD
SYSTÈME DE DÉTECTION DE PLUIE PERMETTANT DE DÉTECTER UNE PRÉCIPITATION ET MUNI D'UN DISPOSITIF DE COMMUNICATION, SYSTÈME D'AIDE À LA CONDUITE, VÉHICULE AUTOMOBILE, AINSI QUE PROCÉDÉ

(30) Priorität: 23.04.2015 DE 102015106231
(43) Veröffentlichungstag der Anmeldung: 28.02.2018
(73) Patentinhaber: Valeo Schalter und Sensoren GmbH, 74321 Bietigheim-Bissingen (DE)
(72) Erfinder: HENZ, Dieter, 75428 Illingen (DE)
(86) Internationale Anmeldenummer: PCT/EP2016/058626
(87) Internationale Veröffentlichungsnummer: WO 2016/169919

(56) Entgegenhaltungen:
- WO-A1-2013/092254
- DE-A1-102011 009 267

## Beschreibung

Die vorliegende Erfindung betrifft eine Regensensorvorrichtung zum Erfassen eines Niederschlags auf einer lichtdurchlässigen Scheibe eines Kraftfahrzeugs mit zumindest einem Sendeelement zum Aussenden von elektromagnetischer Strahlung, mit einem Empfangselement zum Empfangen zumindest eines Teils der ausgesendeten Strahlung, mit einer Recheneinrichtung zum Bestimmen einer Intensität des Niederschlags abhängig von der empfangenen Strahlung und mit einem Gehäuse, in welchem das zumindest eine Sendeelement, das Empfangselement und die Recheneinrichtung angeordnet sind. Die Erfindung betrifft außerdem ein Fahrerassistenzsystem mit einer solchen Regensensorvorrichtung. Zudem betrifft die vorliegende Erfindung ein Kraftfahrzeug mit einem derartigen Fahrerassistenzsystem. Schließlich betrifft die vorliegende Erfindung ein Verfahren zum Betreiben einer Regensensorvorrichtung.

Regensensorvorrichtungen beziehungsweise Regensensoren zur Erfassung der Intensität eines Niederschlags beziehungsweise zur Detektion von Feuchtigkeitstropfen auf einer lichtdurchlässigen Scheibe des Kraftfahrzeugs sind aus dem Stand der Technik in vielfältiger Ausgestaltung bekannt. Sie werden typischerweise in Kraftfahrzeugen eingesetzt, um eine automatische Steuerung der Scheibenwischer in Abhängigkeit von der erfassten Intensität des Niederschlags zu ermöglichen. Der Regensensor erfasst dabei einen bestimmten Bereich der Windschutzscheibe und bestimmt die Intensität des Niederschlags in diesem Bereich.

Ein solcher Regensensor weist üblicherweise eine Vielzahl von Sendeelementen auf, die elektromagnetische Strahlung in den zu betrachtenden Bereich der Scheibe aussenden. Die Sendeelemente sind beispielsweise als Leuchtdioden ausgebildet. Zumindest ein Teil der ausgesendeten Strahlung wird aus dem erfassten Bereich auf eines oder mehrere Empfangselemente des Regensensors reflektiert. Die Empfangselemente erzeugen dann ein Signal, das abhängig von der Intensität der empfangenen Strahlung ist. Um die Intensität des Niederschlags zuverlässig erfassen zu können, werden in der Regel eine Vielzahl von Sendeelementen benötigt, welche beispielsweise um ein Empfangselement herum ringförmig verteilt angeordnet sind. Diese Intensität der empfangenen Strahlung ist wiederum abhängig von der Anzahl der Feuchtigkeitstropfen in dem von dem Regensensor erfassten Bereich der Scheibe. Als Feuchtigkeitstropfen können beispielsweise Regentropfen, Tautropfen, Nebeltropfen, angeschmolzene Schneeflocken oder angetaute Hagelkörner detektiert werden.

Wenn Feuchtigkeitstropfen auf der lichtdurchlässigen Scheibe angeordnet sind, ergibt sich im Bereich der Tropfen statt eines Übergangs Scheibe/Luft ein Übergang Scheibe/Tropfen, was zu einer veränderten Differenz zwischen den Brechungsindizes im Bereich der Tropfen führt. An dem Übergang Scheibe/Tropfen wird die Strahlung nicht mehr in Richtung der Empfangselemente reflektiert, sondern in andere Richtungen total reflektiert oder die Strahlung tritt sogar aus der Scheibe heraus in den Feuchtigkeitstropfen ein.

Hierzu beschreibt die DE 10 2011 009 267 A1 eine Sensoranordnung mit zumindest einem Sensor und einem Navigationsempfänger. Der Navigationsempfänger dient zum Bereitstellen von Positionssignalen, welche eine aktuelle globale Position des Kraftfahrzeugs charakterisieren. Der zumindest eine Sensor und der Navigationsempfänger sind in einem gemeinsamen Gehäuse angeordnet. Der zumindest eine Sensor kann ein Feuchtesensor, ein Regensensor, ein Lichtsensor, ein Sonnenstandssensor und/oder ein Sensor für ein Head-up-Display sein.

Des Weiteren beschreibt die WO 2009/059980 A1 eine laminierte Verglasung, die zwei aus Glasverbundmaterial mit einer sich zwischen diesen erstreckenden Lagen von Laminatzwischenschichten aufweist. Dabei können eine oder mehrere Leitungen zwischen den Scheiben aus Verglasungsmaterial angeordnet sein. Dabei können die Leitungen so angeordnet sein, dass sie den Teil eines kapazitiven Regensensors ausbilden können. Alternativ oder zusätzlich können die Leitungen in Form einer Antenne angeordnet sein. Es kann auch vorgesehen sein, dass ein RFID-Tag zum Speichern von Informationen vorgesehen ist.

Die gattungsgemäße WO 2013/092254A1 beschreibt einen optischen Sensor für ein Kraftfahrzeug, mit einem optischen Sensor zur Erfassung der Benetzung der Windschutzscheibe des Kraftfahrzeugs und/oder zur Erfassung des Umgebungslichts des Kraftfahrzeugs. Zusätzlich umfasst der optische Sensor einen Feuchtesensor zur Erfassung der Feuchtigkeit und/oder Temperatur der inneren Seite der Windschutzscheibe.

DE 10 2011 009 267 A1 offenbart eine Sensoranordnung für ein Kraftfahrzeug, mit zumindest einem Sensor sowie einem Navigationsempfänger zum Bereitstellen von Positionssignalen, welche eine aktuelle globale Position des Kraftfahrzeugs charakterisieren. Der zumindest eine Sensor und der Navigationsempfänger sind in einem gemeinsamen Gehäuse angeordnet. Im Gehäuse sind der mindestens eine Sensor und zumindest eine Komponente des Navigationsempfängers auf einer gemeinsamen Leiterplatte angeordnet.

Es ist Aufgabe der vorliegenden Erfindung, eine Lösung aufzuzeigen, wie der Einsatzbereich einer Regensensorvorrichtung der eingangs genannten Art erweitert werden kann.

Diese Aufgabe wird erfindungsgemäß durch eine Regensensorvorrichtung, durch ein Fahrerassistenzsystem, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Regensensorvorrichtung dient zum Erfassen eines Niederschlags auf einer lichtdurchlässigen Scheibe eines Kraftfahrzeugs. Die Regensensorvorrichtung umfasst zumindest ein Sendeelement zum Aussenden von elektromagnetischer Strahlung, ein Empfangselement zum Empfangen zumindest eines Teils der ausgesendeten Strahlung und eine Recheneinrichtung zum Bestimmen einer Intensität des Niederschlags abhängig von der empfangenen Strahlung. Zudem umfasst die Regensensorvorrichtung ein Gehäuse, in welchem das zumindest eine Sendeelement, das Empfangselement und die Recheneinrichtung angeordnet sind. Darüber hinaus umfasst die Regensensorvorrichtung eine Kommunikationseinrichtung zur berührungslosen Funkfrequenz-Identifizierung, welche zudem in dem Gehäuse angeordnet ist.

Die Regensensorvorrichtung kann an der lichtdurchlässigen Scheibe des Kraftfahrzeugs, insbesondere der Windschutzscheibe, angeordnet werden. Insbesondere kann die Regensensorvorrichtung an eine dem Innenraum des Kraftfahrzeugs zugewandte Seite der Windschutzscheibe geklebt werden. Die Regensensorvorrichtung umfasst einen Regensensor, der das zumindest eine Sendeelement, das Empfangselement und die Recheneinrichtung umfasst. Der Regensensor kann auch mehrere Sendeelemente aufweisen, die elektromagnetische Strahlung durch die lichtdurchlässige Scheibe hindurch aussenden können. Als die elektromagnetische Strahlung kann das zumindest eine Sendeelement beispielsweise Licht im sichtbaren Wellenlängenbereich, im infraroten Wellenlängenbereich oder im ultravioletten Wellenlängenbereich aussenden. Anhand des Anteils der ausgesendeten elektromagnetischen Strahlung, der zu dem Empfangselement zurück reflektiert wird, kann die Recheneinrichtung die Intensität des Niederschlags bestimmen. Die Recheneinrichtung kann zudem dazu dienen, das zumindest eine Sendeelement zum Aussenden der elektromagnetischen Strahlung anzusteuern.

Die Regensensorvorrichtung weist ferner eine Kommunikationseinrichtung auf, die zur berührungslosen Funkfrequenz-Identifizierung ausgelegt ist. Die berührungslose Funkfrequenz-Identifizierung kann auch als Identifizierung mit Hilfe elektromagnetischer Wellen beziehungsweise als RFID (Radio-Frequency Identification) bezeichnet werden. Die Kommunikationseinrichtung kann einen Transponder beziehungsweise ein Funketikett umfassen. Alternativ oder zusätzlich kann die Kommunikationseinrichtung ein Lesegerät aufweisen. Dabei kann die Kommunikationseinrichtung als aktives oder als passives RFID-System ausgebildet sein. Passive Systeme haben üblicherweise eine Reichweite von wenigen Metern. Aktive Systeme können eine Reichweite von bis zu 100 Metern erreichen. Unter Einsatz eines aktiven RFID-Transponders kann das Kraftfahrzeug beispielsweise über eine große Entfernung identifiziert werden. Die Kommunikationseinrichtung ist in das Gehäuse des Regensensors integriert. Dieses Gehäuse kann dann an der Windschutzscheibe des Kraftfahrzeugs angeordnet werden. Somit kann mit der Regensensorvorrichtung einerseits Niederschlag erfasst werden und andererseits eine Identifizierung mit Hilfe von elektromagnetischen Wellen erfolgen.

In einer Ausführungsform weist die Kommunikationseinrichtung einen Transponder zum Bereitstellen einer Kennung für ein kraftfahrzeugexternes Lesegerät auf. Ein derartiger Transponder kann auch als Funketikett oder als Tag bezeichnet werden. Zum Auslesen der Kennung kann mit einem kraftfahrzeugexternen Lesegerät ein hochfrequentes elektromagnetisches Wechselfeld bereitgestellt werden, welchem der Transponder ausgesetzt ist. Die von dem Transponder über eine Antenne aufgenommene Hochfrequenzenergie dient der Energieversorgung eines Chips des Transponders. Es kann auch vorgesehen sein, dass eine zusätzliche Energiequelle, beispielsweise in Form einer Batterie, vorgesehen ist. Der Transponder kann dann die Kennung, die in einem Speicherelement gespeichert ist, an das Lesegerät übertragen.

Bevorzugt ist der Transponder dazu ausgelegt, als die Kennung Zugangsdaten für einen Parkbereich für das Kraftfahrzeug und/oder Identifikationsdaten für ein Mautsystem bereitzustellen. Für Zufahrtskontrollen ist es aktuell beispielsweise notwendig, das Kraftfahrzeug vor einer Schranke zu stoppen. Dort muss der Fahrer das Fenster öffnen und eine Karte beziehungsweise einen Chip an einem Automaten positionieren, damit dieser die Zufahrtsberechtigung prüfen kann. Ist der Fahrer berechtigt einzufahren, öffnet der Automat die Schranke. Der Fahrer schließt das Fenster und fährt in den Parkbereich ein. Dieser Prozess ist allerdings für den Fahrer unkomfortabel, da er das Kraftfahrzeug anhalten muss und das Fenster öffnen muss. Außerdem sind mittlerweile eine Vielzahl unterschiedlicher Zufahrtskontrollen entstanden. Der Fahrer muss also gegebenenfalls mehrere Chips oder Karten mit sich führen. Derartige Karten oder Chips können durch den Transponder in der Regensensorvorrichtung ersetzt werden. Da das Kraftfahrzeug in einem Einfahrtsbereich eines Parkplatzes oder eines Parkhauses üblicherweise langsam fährt, kann die Zufahrtskontrolle mittels des kraftfahrzeugexternen Lesegeräts während der Fahrt durchgeführt werden. Für den Fahrer ist es auf diese Weise möglich, komfortabel in den Parkbereich einzufahren. Durch die Standardisierung der RFID-Technik können Zufahrtskontrollen für jeden Parkbereich gleich ausgeführt werden. Ebenso können die Zugangsdaten für ein Parkhaus oder einen Parkplatz vor der ersten Ankunft durchgeführt werden, wodurch keine Registrierung vor Ort mehr nötig ist. Die Kennung kann alternativ oder zusätzlich Identifikationsdaten für ein Mautsystem bereitstellen. Somit ist es auf einfache und komfortable Weise möglich, Identifikationsdaten für einen kostenpflichtigen Fahrbahnabschnitt bereitzustellen.

In einer Ausführungsform weist die Regensensorvorrichtung eine Leiterplatte auf und eine Antenne des Transponders ist auf der Leiterplatte angeordnet. Der Transponder beziehungsweise der RFID-Tag kann in die Leiterplatte des Regensensors implementiert werden. Auf dieser Leiterplatte können auch die Sendeeinheit und die Empfangseinheit des Regensensors angeordnet sein. Die Antenne besteht üblicherweise aus einer Leiterschleife, die von dem kraftfahrzeugexternen Lesegerät stimuliert werden kann. Zudem kann auf der Leiterplatte ein Chip angeordnet sein, der mit der Antenne beziehungsweise Leiterschleife elektrisch verbunden ist. Dieser Chip kann -wie zuvor erwähnt - mittels des kraftfahrzeugexternen Lesegeräts mit elektrischer Energie versorgt werden. Durch die Stromversorgung sendet der Chip über die gleiche Leiterschleife beziehungsweise Antenne seine Kennung aus. Somit kann auf einfache und kostengünstige Weise ein RFID-Transponder in einem Regensensor integriert werden.

In einer weiteren Ausführungsform ist die Antenne des Transponders als spritzgegossener Schaltungsträger auf und/oder in dem Gehäuse angeordnet. Mit anderen Worten kann die Leiterschleife beziehungsweise die Antenne bei der Herstellung des Gehäuses in das Gehäuse mit eingebracht werden. Die Antenne beziehungsweise Leiterschleife kann nach der sogenannten MID-Technik hergestellt werden (MID - Molded Interconnect Device). Hierzu kann beispielsweise ein Zweikomponentenspritzgussverfahren verwendet werden. Somit kann die Regensensorvorrichtung besonders Bauraum sparend bereitgestellt werden.

In einer weiteren Ausführungsform weist die Kommunikationseinrichtung ein Lesegerät zum Auslesen eines kraftfahrzeugexternen Transponders auf. Alternativ oder zusätzlich zu dem RFID-Transponder kann die Kommunikationseinrichtung ein RFID-Lesegerät aufweisen. Somit kann beispielsweise eine Kennung eines kraftfahrzeugexternen Transponders mit dem Lesegerät ausgelesen werden. In diesem Fall kann die Kommunikationseinrichtung beispielsweise mit einem Schließsystem des Kraftfahrzeugs verbunden sein. Wenn der Fahrer des Kraftfahrzeugs den kraftfahrzeugexternen Transponder mit sich führt, kann ihm beispielsweise eine Zugangsberechtigung zu dem Kraftfahrzeug erlaubt werden. Ebenso kann es dem Fahrer ermöglicht werden, das Kraftfahrzeug zu starten.

Weiterhin ist es vorteilhaft, wenn die Regensensorvorrichtung einen Lichtsensor zum Erfassen von Lichtverhältnissen in einem Umgebungsbereich des Kraftfahrzeugs erfasst. Mit Hilfe des Lichtsensors kann beispielsweise die Beleuchtung in der Umgebung des Kraftfahrzeugs erkannt werden. Die Daten des Lichtsensors können beispielsweise dazu genutzt werden, die Scheinwerfer des Kraftfahrzeugs automatisch zu aktivieren oder zu deaktivieren. Weiterhin kann der Lichtsensor derart ausgestaltet sein, dass er eine Einfahrt in einen Tunnel erkennen kann. Der Lichtsensor kann bevorzugt in dem Gehäuse der Regensensorvorrichtung angeordnet sein.

Gemäß einer weiteren Ausführungsform umfasst die Regensensorvorrichtung einen Sonnenstandssensor zum Erfassen einer Sonnenstrahlungsleistung. Mit dem Sonnenstandssensor kann insbesondere erfasst werden, welche Strahlungsleistung von der Sonne in den Innenraum des Kraftfahrzeugs eintritt. Die Daten des Sonnenstandssensors können beispielsweise dazu genutzt werden, eine Klimaanlage des Kraftfahrzeugs automatisch zu steuern. Auch hier kann es vorgesehen sein, dass der Sonnenstandssensor in dem Gehäuse der Regensensorvorrichtung angeordnet ist.

In einer weiteren Ausführungsform umfasst die Regensensorvorrichtung eine Befestigungseinrichtung zum Befestigen der Regensensorvorrichtung an der lichtdurchlässigen Scheibe des Kraftfahrzeugs. Beispielsweise kann das Gehäuse beziehungsweise die Regensensorvorrichtung an die Windschutzscheibe des Kraftfahrzeugs geklebt werden. Bevorzugt kann die Regensensorvorrichtung in einem Bereich der Windschutzscheibe angeordnet werden, der frei von einer metallischen Beschichtung ist. Da die Regensensorvorrichtung nicht von der Metallverkleidung des Kraftfahrzeugs oder der metallischen Beschichtung der Windschutzscheibe verdeckt wird, kann die berührungslose Funkfrequenz-Identifizierung mittels der Kommunikationseinrichtung zuverlässig ermöglicht werden.

Ein erfindungsgemäßes Fahrerassistenzsystem für ein Kraftfahrzeug umfasst eine erfindungsgemäße Regensensorvorrichtung. Das Fahrerassistenzsystem kann beispielsweise dazu ausgelegt sein, die Scheibenwischer in Abhängigkeit von der mit der Regensensorvorrichtung erfassten Intensität des Niederschlags anzusteuern.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Ein erfindungsgemäßes Verfahren dient zum Betreiben einer Regensensorvorrichtung, bei welchem zum Erfassen eines Niederschlags auf einer lichtdurchlässigen Scheibe eines Kraftfahrzeugs mittels zumindest eines Sendeelements elektromagnetische Strahlung ausgesendet wird, mittels eines Empfangselements zumindest ein Teil der ausgesendeten Strahlung empfangen wird und mittels einer Recheneinrichtung eine Intensität des Niederschlags abhängig von der empfangenen Strahlung bestimmt wird. Dabei weist die Regensensorvorrichtung ein Gehäuse auf, in welchem das zumindest eine Sendeelement, das Empfangselement und die Recheneinrichtung angeordnet sind. Zudem weist die Regensensorvorrichtung eine Kommunikationseinrichtung auf, welche zudem in dem Gehäuse angeordnet ist und mittels welcher eine berührungslose Funkfrequenz-Identifizierung durchgeführt wird.

Die mit Bezug auf die erfindungsgemäße Regensensorvorrichtung vorgestellten bevorzugten Ausführungsformen und deren Vorteile gelten entsprechend für das erfindungsgemäße Fahrerassistenzsystem, das erfindungsgemäße Kraftfahrzeug sowie das erfindungsgemäße Verfahren.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches eine Regensensorvorrichtung aufweist, wobei die Regensensorvorrichtung einen Transponder umfasst;
- Fig. 2: das Kraftfahrzeug gemäß Fig. 1 in einer weiteren Ausführungsform, wobei die Regensensorvorrichtung ein Lesegerät umfasst;
- Fig. 3: eine Leiterplatte der Regensensorvorrichtung in einer Perspektivansicht; und
- Fig. 4: die Leiterplatte gemäß Fig. 3 in einer weiteren Ansicht.

In den Figuren werden gleiche und funktionsgleiche Elemente mit den gleichen Bezugszeichen versehen.

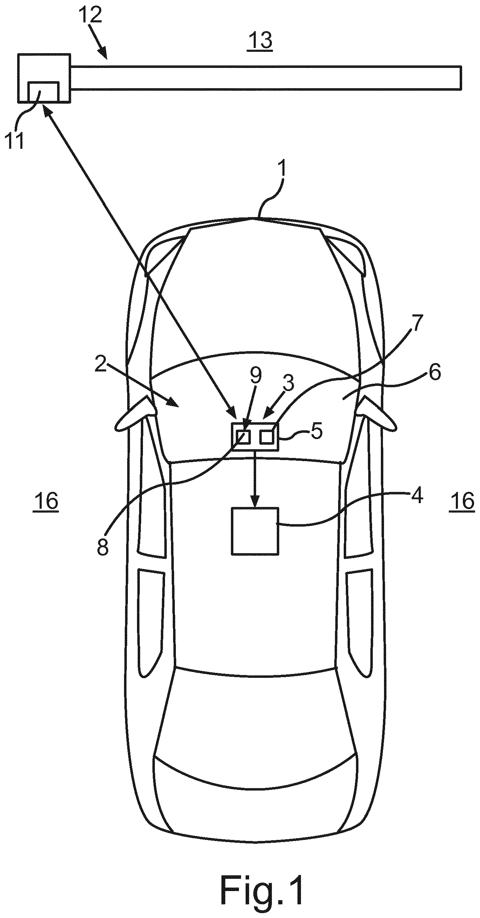

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 umfasst wiederum eine Regensensorvorrichtung 3 sowie eine Steuereinrichtung 4. Die Steuereinrichtung 4 kann beispielsweise durch ein elektronisches Steuergerät (ECU - Electronic Control Unit) des Kraftfahrzeugs 1 gebildet sein.

Die Regensensorvorrichtung 3 weist ein Gehäuse 5 auf, das an einer lichtdurchlässigen Scheibe 6 des Kraftfahrzeugs 1 angeordnet werden kann. In dem vorliegenden Ausführungsbeispiel ist die Regensensorvorrichtung 3 beziehungsweise das Gehäuse 5 an einer dem Innenraum zugewandten Seite einer Windschutzscheibe 6 des Kraftfahrzeugs 1 angeordnet. Das Gehäuse 5 kann an dem der Windschutzscheibe zugewandten Bereich offen sein oder lichtdurchlässig ausgebildet sein. Die Regensensorvorrichtung 3 ist insbesondere in einem Bereich der Windschutzscheibe 6 angeordnet, welcher frei von einer metallischen Beschichtung ist. Die Regensensorvorrichtung 3 umfasst einen Regensensor 7, der-wie nachfolgend näher erläutert - dazu dient, eine Intensität von Niederschlag auf der Windschutzscheibe 6 zu erfassen. Des Weiteren umfasst die Regensensorvorrichtung 3 eine Kommunikationseinrichtung 8, die zur berührungslosen Funkfrequenz-Identifizierung ausgelegt ist. Mit anderen Worten ist die Kommunikationseinrichtung 8 zur Identifizierung mittels elektromagnetischer Wellen ausgelegt. Die berührungslose Funkfrequenz-Identifizierung kann auch als Radio-Frequency Idenfication (RFID) bezeichnet werden. Die Kommunikationseinrichtung 8 ist also Teil eines RFID-Systems. Die Kommunikationseinrichtung 8 kann einen Transponder 9 und/oder ein Lesegerät 10 umfassen.

In dem Ausführungsbeispiel gemäß Fig. 1 umfasst die Kommunikationseinrichtung 8 einen Transponder 9. Dieser Transponder 9 dient zum Bereitstellen einer Kennung für ein kraftfahrzeugexternes Lesegerät 11 über berührungslose Funkfrequenz-Identifizierung. Das kraftfahrzeugexterne Lesegerät 11 ist vorliegend einer Zugangseinrichtung 12 für einen Parkbereich 13 zugeordnet. Die Zugangsvorrichtung 12, die vorliegend nur schematisch dargestellt ist, kann beispielsweise als Schranke ausgebildet sein. Wenn der Fahrer 15 mit seinem Kraftfahrzeug 1 auf die Zugangsvorrichtung 12 zufährt, kann das kraftfahrzeugexterne Lesegerät 11 die Kennung des Transponders 9 auslesen, die beispielsweise Zugangsdaten für den Parkbereich 13 umfassen. Der Parkbereich 13 kann ein Parkplatz, ein Parkhaus, ein Firmengelände oder dergleichen sein. Es kann auch vorgesehen sein, dass das kraftfahrzeugexterne Lesegerät 11 einem Mautsystem zugeordnet ist. Die Kennung des Transponders 9 kann in diesem Fall Identifikationsdaten für das Mautsystem beinhalten.

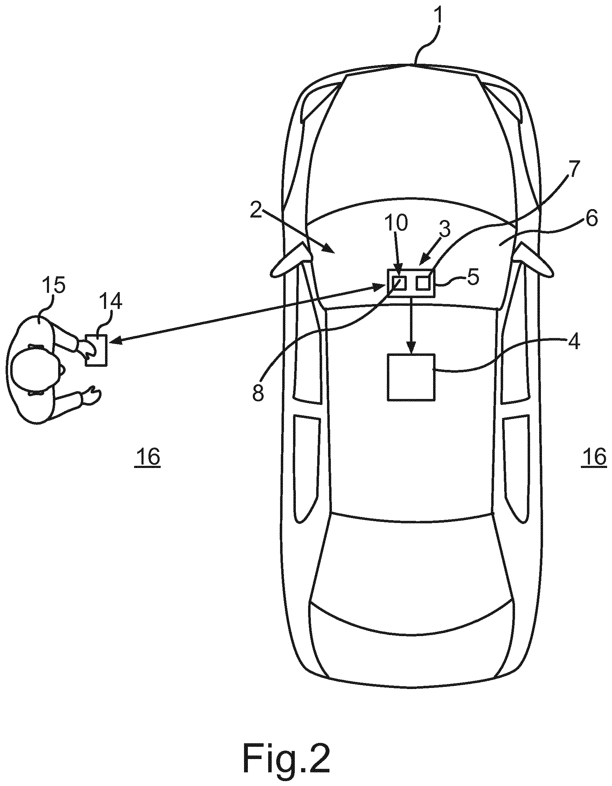

Fig. 2 zeigt ein Kraftfahrzeug 1 in einer weiteren Ausführungsform. In diesem Ausführungsbeispiel weist die Kommunikationseinrichtung 8 der Regensensorvorrichtung 3 ein Lesegerät 10 auf. Mit diesem Lesegerät 10 kann eine Kennung eines kraftfahrzeugexternen Transponders 14 über berührungslose Funkfrequenz-Identifizierung ausgelesen werden. Der kraftfahrzeugexterne Transponder 14 kann beispielsweise Zugangsdaten aufweisen, mit denen das Kraftfahrzeug 1 geöffnet werden kann. So kann beispielsweise mittels der Steuereinrichtung 8 ein Schließsystem des Kraftfahrzeugs 1 in Abhängigkeit von der ausgelesenen Kennung angesteuert werden. Somit kann es beispielsweise ermöglicht werden, dass der Fahrer 15, der den kraftfahrzeugexternen Transponder 14 mit sich führt, keinen Schlüssel zum Öffnen des Fahrzeugs 1 benötigt. Es kann auch vorgesehen sein, dass der kraftfahrzeugexterne Transponders 14 in einen Schlüssel des Kraftfahrzeugs 1 integriert ist.

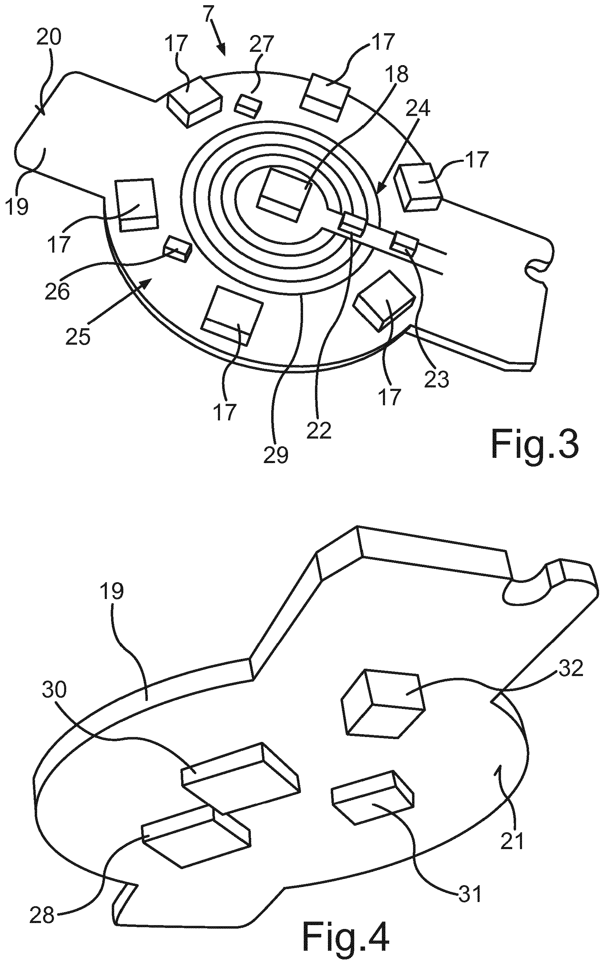

Fig. 3 zeigt eine Leiterplatte 19 der Regensensorvorrichtung 3 in einer Perspektivansicht. Die Leiterplatte 19 ist in dem Gehäuse 5 angeordnet. Der Regensensor 7 umfasst zumindest ein Sendeelement 17. In dem vorliegenden Ausführungsbeispiel umfasst der Regensensor 7 sechs Sendeelemente 17, die beispielsweise als Leuchtdioden ausgebildet sind. Mit den Sendeelementen 17 kann elektromagnetische Strahlung in Richtung der Windschutzscheibe 6 ausgesendet werden. Zudem umfasst der Regensensor 7 ein Empfangselement 18, zum Empfangen zumindest eines Teils der ausgesendeten elektromagnetischen Strahlung. Das Empfangselement 18 ist vorliegend zentral innerhalb der Sendeelemente 17 angeordnet. Die Sendeelemente 17 und das Empfangselement 18 ist auf einer Vorderseite 20 der Leiterplatte 19 angeordnet.

Darüber hinaus ist auf der Leiterplatte 19 beziehungsweise auf der Vorderseite 20 der Leiterplatte 19 ein Lichtsensor 24 angeordnet. Der Lichtsensor 24 umfasst eine erste Lichtdiode 22 und eine zweite Lichtdiode 23. Mit den Lichtdioden 22, 23 können Beleuchtungsverhältnisse in einem Umgebungsbereich 16 des Kraftfahrzeugs 1 erfasst werden. Zudem kann eine Tunneleinfahrt und/oder Tunnelausfahrt erkannt werden. Darüber hinaus ist auf der Leiterplatte 19 ein Sonnenstandssensor 25 angeordnet, der eine erste Diode 26 und eine zweite Diode 27 umfasst. Mit dem Sonnenstandssensor 25 kann die Sonnenstrahlungsleistung erfasst werden.

Fig. 4 zeigt die Leiterplatte 19 gemäß Fig. 3 in einer weiteren Perspektivansicht. Hierbei ist zu erkennen, dass auf einer Rückseite 21 der Leiterplatte 19 eine Recheneinrichtung 28 angeordnet ist. Die Recheneinrichtung 28 kann als benutzerspezifische Schaltung beziehungsweise als ASIC ausgebildet sein. Die Recheneinrichtung 28 dient zum Auswerten der Signale des Regensensors 7, des Lichtsensors 24 und/oder des Sonnenstandssensors 25. Ferner sind auf der Rückseite 21 der Leiterplatte 19 ein Mikrocontroller 30 und ein Kommunikationsbaustein 31 für einen Fahrzeugbus angeordnet. Darüber hinaus ist auf der Rückseite 21 der Leiterplatte 19 ein Chip 32 angeordnet, der mit der Antenne 29 elektrisch verbunden ist. Der Chip 32 kann beispielsweise über entsprechende Durchkontaktierungen mit der Antenne 29 elektrisch verbunden sein.

Die Steuereinrichtung 4 des Fahrerassistenzsystems 2 ist mit der Regensensorvorrichtung 3 zur Datenübertragung verbunden. Die Steuereinrichtung 4 kann beispielsweise in Abhängigkeit von der mit dem Regensensor 7 erfassten Intensität des Niederschlags einen Scheibenwischer des Kraftfahrzeugs 1 ansteuern. Zudem kann die Steuereinrichtung 4 in Abhängigkeit von den Signalen des Lichtsensors 24 die Außenbeleuchtung des Kraftfahrzeugs 1 ansteuern. Ferner kann die Steuereinrichtung 4 in Abhängigkeit von den Signalen des Sonnenstandssensors 25 eine Klimaanlage des Kraftfahrzeugs 1 steuern.

## Patentansprüche

1. Regensensorvorrichtung (3) zum Erfassen eines Niederschlags auf einer lichtdurchlässigen Scheibe (6) eines Kraftfahrzeugs (1), mit zumindest einem Sendeelement (17) zum Aussenden von elektromagnetischer Strahlung, mit einem Empfangselement (18) zum Empfangen zumindest eines Teils der ausgesendeten Strahlung, mit einer Recheneinrichtung (28) zum Bestimmen einer Intensität des Niederschlags abhängig von der empfangenen Strahlung und mit einem Gehäuse (5), in welchem das zumindest eine Sendeelement (17), das Empfangselement (18) und die Recheneinrichtung (28) angeordnet sind,
**dadurch gekennzeichnet, dass**
die Regensensorvorrichtung (3) eine Kommunikationseinrichtung (8) zur berührungslosen Funkfrequenz-Identifizierung aufweist, welche zudem in dem Gehäuse (5) angeordnet ist.

2. Regensensorvorrichtung (3) nach Anspruch 1,
**dadurch gekennzeichnet, dass**
die Kommunikationseinrichtung (8) einen Transponder (9) zum Bereitstellen einer Kennung für ein kraftfahrzeugexternes Lesegerät (11) aufweist.

3. Regensensorvorrichtung (3) nach Anspruch 2,
**dadurch gekennzeichnet, dass**
der Transponder (9) dazu ausgelegt ist, als die Kennung Zugangsdaten für einen Parkbereich (13) für das Kraftfahrzeug (1) und/oder Identifikationsdaten für ein Mautsystem bereitzustellen.

4. Regensensorvorrichtung (3) nach Anspruch 2 oder 3,
**dadurch gekennzeichnet, dass**
die Regensensorvorrichtung (3) eine Leiterplatte (19) aufweist und eine Antenne (29) des Transponders (9) auf der Leiterplatte (19) angeordnet ist.

5. Regensensorvorrichtung (3) nach Anspruch 2 oder 3
**dadurch gekennzeichnet, dass**
eine Antenne (29) des Transponders (9) als spritzgegossener Schaltungsträger auf und/oder in dem Gehäuse (5) angeordnet ist.

6. Regensensorvorrichtung (3) nach einem der vorhergehenden Ansprüche,
**dadurch gekennzeichnet, dass**
die Kommunikationseinrichtung (8) ein Lesegerät (10) zum Auslesen eines kraftfahrzeugexternen Transponders (14) aufweist.

7. Regensensorvorrichtung (3) nach einem der vorhergehenden Ansprüche,
**dadurch gekennzeichnet, dass**
die Regensensorvorrichtung (3) einen Lichtsensor (24) zum Erfassen von Lichtverhältnissen in einem Umgebungsbereich (16) des Kraftfahrzeugs (1) umfasst.

8. Regensensorvorrichtung (3) nach einem der vorhergehenden Ansprüche,
**dadurch gekennzeichnet, dass**
die Regensensorvorrichtung (3) einen Sonnenstandssensor (25) zum Erfassen einer Sonnenstrahlungsleistung umfasst.

9. Regensensorvorrichtung (3) nach einem der vorhergehenden Ansprüche,
**dadurch gekennzeichnet, dass**
die Regensensorvorrichtung (3) eine Befestigungseinrichtung zum Befestigen der Regensensorvorrichtung (3) an der lichtdurchlässigen Scheibe (6) des Kraftfahrzeugs (1) umfasst.

10. Fahrerassistenzsystem (2) für ein Kraftfahrzeug (1) mit einer Regensensorvorrichtung (3) nach einem der vorhergehenden Ansprüche.

11. Kraftfahrzeug (1) mit einem Fahrerassistenzsystem (2) nach Anspruch 10.

12. Verfahren zum Betreiben einer Regensensorvorrichtung (3), bei welchem zum Erfassen eines Niederschlags auf einer lichtdurchlässigen Scheibe (6) eines Kraftfahrzeugs (1) mittels zumindest eines Sendeelements (17) elektromagnetische Strahlung ausgesendet wird, mittels eines Empfangselements (18) zumindest ein Teil der ausgesendeten Strahlung empfangen wird und mittels einer Recheneinrichtung (28) eine Intensität des Niederschlags abhängig von der empfangenen Strahlung bestimmt wird, wobei die Regensensorvorrichtung (3) ein Gehäuse (5) aufweist, in welchem das zumindest eine Sendeelement (17), das Empfangselement (18) und die Recheneinrichtung (28) angeordnet sind, **dadurch gekennzeichnet, dass**
die Regensensorvorrichtung (3) eine Kommunikationseinrichtung (8) aufweist, welche zudem in dem Gehäuse (5) angeordnet ist und mittels welcher eine berührungslose Funkfrequenz-Identifizierung durchgeführt wird.

## Claims

1. Rain sensor apparatus (3) for capturing precipitation on a transparent window pane (6) of a motor vehicle (1), having at least one transmitting element (17) for emitting electromagnetic radiation, having a receiving element (18) for receiving at least one part of the emitted radiation, having a computing device (28) for determining an intensity of the precipitation on the basis of the received radiation, and having a housing (5) in which the at least one transmitting element (17), the receiving element (18) and the computing device (28) are arranged,
**characterized in that**
the rain sensor apparatus (3) has a communication device (8) for contactless radio-frequency identification which is also arranged in the housing (5) .

2. Rain sensor apparatus (3) according to Claim 1,
**characterized in that**
the communication device (8) has a transponder (9) for providing an identifier for a reader (11) outside the motor vehicle.

3. Rain sensor apparatus (3) according to Claim 2,
**characterized in that**
the transponder (9) is designed to provide, as the identifier, access data for a parking area (13) for the motor vehicle (1) and/or identification data for a toll system.

4. Rain sensor apparatus (3) according to Claim 2 or 3,
**characterized in that**
the rain sensor apparatus (3) has a printed circuit board (19), and an antenna (29) of the transponder (9) is arranged on the printed circuit board (19).

5. Rain sensor apparatus (3) according to Claim 2 or 3,
**characterized in that**
an antenna (29) of the transponder (9) is arranged as an injection-moulded circuit carrier on and/or in the housing (5).

6. Rain sensor apparatus (3) according to one of the preceding claims,
**characterized in that**
the communication device (8) has a reader (10) for reading a transponder (14) outside the motor vehicle.

7. Rain sensor apparatus (3) according to one of the preceding claims,
**characterized in that**
the rain sensor apparatus (3) comprises a light sensor (24) for capturing light conditions in a surrounding area (16) of the motor vehicle (1).

8. Rain sensor apparatus (3) according to one of the preceding claims,
**characterized in that**
the rain sensor apparatus (3) comprises a sun position sensor (25) for capturing a solar radiation power.

9. Rain sensor apparatus (3) according to one of the preceding claims,
**characterized in that**
the rain sensor apparatus (3) comprises a fastening device for fastening the rain sensor apparatus (3) to the transparent window pane (6) of the motor vehicle (1).

10. Driver assistance system (2) for a motor vehicle (1) having a rain sensor apparatus (3) according to one of the preceding claims.

11. Motor vehicle (1) having a driver assistance system (2) according to Claim 10.

12. Method for operating a rain sensor apparatus (3), in which, in order to capture precipitation on a transparent window pane (6) of a motor vehicle (1), electromagnetic radiation is emitted using at least one transmitting element (17), at least one part of the emitted radiation is received using a receiving element (18) and an intensity of the precipitation is determined on the basis of the received radiation using a computing device (28), wherein the rain sensor apparatus (3) has a housing (5) in which the at least one transmitting element (17), the receiving element (18) and the computing device (28) are arranged,
**characterized in that**
the rain sensor apparatus (3) has a communication device (8) which is also arranged in the housing (5) and is used to carry out contactless radio-frequency identification.

## Revendications

1. Arrangement capteur de pluie (3) destiné à détecter une précipitation sur une vitre (6) transparente d'un véhicule automobile (1), comprenant au moins un élément émetteur (17) destiné à émettre un rayonnement électromagnétique, comprenant un élément récepteur (18) destiné à recevoir au moins une partie du rayonnement émis, comprenant un dispositif de calcul (28) destiné à calculer une intensité de la précipitation en fonction du rayonnement reçu et comprenant un boîtier (5) dans lequel sont disposés l'au moins un élément émetteur (17), l'élément récepteur (18) et le dispositif de calcul (28),
**caractérisé en ce que**
l'arrangement capteur de pluie (3) possède un dispositif de communication (8) servant à l'identification par radiofréquence sans contact, lequel est en plus disposé dans le boîtier (5) .

2. Arrangement capteur de pluie (3) selon la revendication 1, **caractérisé en ce que** le dispositif de communication (8) possède un transpondeur (9) destiné à fournir un identificateur pour un lecteur (11) externe au véhicule automobile.

3. Arrangement capteur de pluie (3) selon la revendication 2, **caractérisé en ce que** le transpondeur (9) est conçu pour fournir en tant qu'identificateur des données d'accès pour une zone de stationnement (13) pour le véhicule automobile (1) et/ou des données d'identification pour un système de péage.

4. Arrangement capteur de pluie (3) selon la revendication 2 ou 3, **caractérisé en ce que** l'arrangement capteur de pluie (3) possède un circuit imprimé (19) et une antenne (29) du transpondeur (9) est disposée sur le circuit imprimé (19).

5. Arrangement capteur de pluie (3) selon la revendication 2 ou 3, **caractérisé en ce qu'**une antenne (29) du transpondeur (9) est disposée sur et/ou dans le boîtier (5) sous la forme d'un porte-circuit moulé par injection.

6. Arrangement capteur de pluie (3) selon l'une des revendications précédentes, **caractérisé en ce que** le dispositif de communication (8) possède un lecteur (10) destiné à lire un transpondeur (14) externe au véhicule automobile.

7. Arrangement capteur de pluie (3) selon l'une des revendications précédentes, **caractérisé en ce que** l'arrangement capteur de pluie (3) comporte un capteur de lumière (24) destiné à détecter les conditions de luminosité dans une zone environnante (16) du véhicule automobile (1).

8. Arrangement capteur de pluie (3) selon l'une des revendications précédentes, **caractérisé en ce que** l'arrangement capteur de pluie (3) comporte un capteur de position du soleil (25) destiné à détecter une puissance du rayonnement solaire.

9. Arrangement capteur de pluie (3) selon l'une des revendications précédentes, **caractérisé en ce que** l'arrangement capteur de pluie (3) comporte un dispositif de fixation destiné à fixer l'arrangement capteur de pluie (3) au niveau de la vitre (6) transparente du véhicule automobile (1).

10. Système d'assistance au conducteur (2) pour un véhicule automobile (1) équipé d'un arrangement capteur de pluie (3) selon l'une des revendications précédentes.

11. Véhicule automobile (1) équipé d'un système d'assistance au conducteur (2) selon la revendication 10.

12. Procédé pour faire fonctionner un arrangement capteur de pluie (3), avec lequel un rayonnement électromagnétique est émis au moyen d'au moins un élément émetteur (17) en vue de détecter une précipitation sur une vitre (6) transparente d'un véhicule automobile (1), au moins une partie du rayonnement émis est reçue au moyen d'un élément récepteur (18) et une intensité de la précipitation est définie au moyen d'un dispositif de calcul (28) en fonction du rayonnement reçu, l'arrangement capteur de pluie (3) possédant un boîtier (5) dans lequel sont disposés l'au moins un élément émetteur (17), l'élément récepteur (18) et le dispositif de calcul (28),
**caractérisé en ce que**
l'arrangement capteur de pluie (3) possède un dispositif de communication (8) qui est en plus disposé dans le boîtier (5) et au moyen duquel est effectuée une identification par radiofréquence sans contact.
